## Europäisches Patentamt

(19)  **European Patent Office**                    (11) Publication number:          **0 053 356**

**Office européen des brevets**                                                **B1**

(12)                    **EUROPEAN PATENT SPECIFICATION**

(45) Date of publication of patent specification: **27.02.85**      (51) Int. Cl.⁴: **B 60 S 1/58**

(21) Application number: **81109899.5**

(22) Date of filing: **25.11.81**

(54) **An electrical wiring arrangement in the rear body of an automotive vehicle.**

(30) Priority: **28.11.80 JP 166723/80**

(43) Date of publication of application:
**09.06.82 Bulletin 82/23**

(45) Publication of the grant of the patent:
**27.02.85 Bulletin 85/09**

(84) Designated Contracting States:
**DE FR GB**

(56) References cited:
**FR-A-2 361 004**
**GB-A-1 540 464**

(73) Proprietor: **NISSAN MOTOR COMPANY,
LIMITED
No.2, Takara-cho, Kanagawa-ku
Yokohama-shi Kanagawa-ken 221 (JP)**

(72) Inventor: **Imai, Iwao
68, Oppamahigashi-cho 3-chome
Yokosuka-shi Kanagawa-ken (JP)**
Inventor: **Tomiyama, Raiji
462-16, Hishinuma Chigasaki-shi
Kanagawa-ken (JP)**
Inventor: **Sone, Masazumi
8-3, Komazawa 5-chome
Setagaya-ku Tokyo (JP)**

(74) Representative: **Patentanwälte TER MEER -
MÜLLER - STEINMEISTER
Triftstrasse 4
D-8000 München 22 (DE)**

Courier Press, Leamington Spa, England.

## Description

This invention relates to an improvement for an arrangement of wiring used in an automotive vehicle. More particularly, this invention relates to a noise preventive arrangement of wiring in an automotive vehicle in which a radio antenna and a hot-wire-type rear-defroster are arranged neighbouring each other or assembled in a single structure on the same surface of a rear-windshield.

In many vehicles, an antenna for a radio receiver and a hot-wire-type rear defroster (hereinafter, referred to as "rear-defroster") comprising a defroster sensor for controlling said defroster are arranged neighbouringly or assembled in a single structure. In addition, electrical devices such a lamps, audio speakers, motors, an air cleaner for a passenger compartment and the like can be mounted on the rear body of the vehicle. Conventionally, the wiring of the antenna, the rear-defroster, and the electrical de vices are arranged in such manner that they are bunched into a single cable from the rear body to an instrument panel at the front body of the vehicle. When switches of these electrical devices are turned on or off, switching noises may be generated, thereby possibly transmitting these radio noises from the wiring of the electrical devices to that of the rear-defroster or the antenna. Accordingly, in the conventional art, it is required to provide a noise-preventing device for each electrical device in order to prevent the generation of radio noise. This will possibly increase cost noticeably.

It is therefore an object of the present invention to provide an improved wiring arrangement which can prevent noisy radio reception due to nearby electrical devices without increasing cost.

Another object of the present invention is to provide a noise-preventive wiring arrangement which can be used commonly for vehicles.

In accordance with the present invention, the above object is accomplished by a wiring arrangement including a first cable connected to a rear-defroster integral with or neighboring an antenna, and to a defroster sensor isolated from a second cable connected to electrical devices in the space to the rear of a rear-seat back panel which is provided between a rear parcel-tray panel and a floor body panel, and filter elements such as condensers, in addition to conventionally arranged filter elements, between the first cable and the body panel in the vicinity of an input terminal of a defroster sensor amplifier so that radio noise ·due to signals generated by the electrical devices can be reduced.

Other objects, means, and advantages of the present invention will become apparent to one skilled in the art thereof from the following description.

Fig. 1 is a pictorial view of conventional wiring, taken from the rear passenger seat, which shows a rear windshield, including an antenna and an electrical hot-wire type defroster and the vicinity thereof;

Fig. 2 is a pictorial plane view of conventional wiring shown in Fig. 1;

Fig. 3 is a pictorial view similar to Fig. 1 showing one embodiment of a noise preventive wiring arrangement in accordance with the present invention;

Fig. 4 is a pictorial plane view of the embodiment of the present invention shown in Fig. 3;

Fig. 5 is a pictorial side elevation view of the embodiment shown in Fig. 3; and

Fig. 6 is a graph representing a comparison between the noise generated by the embodied wiring arrangement according to the present invention and that of conventional arrangement.

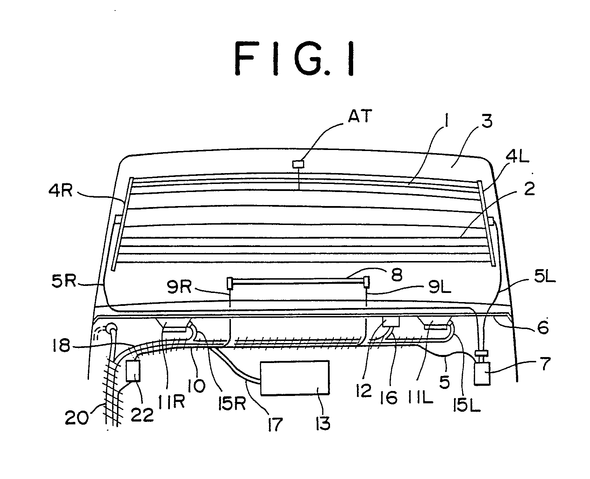

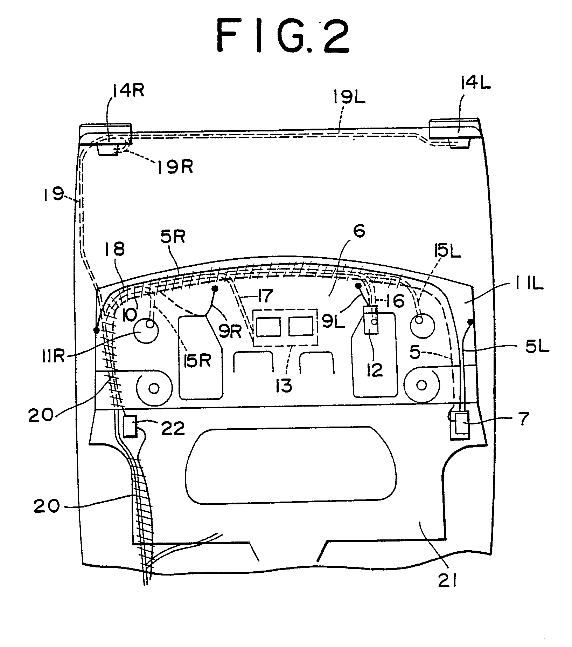

Referring to Fig. 1, there is shown an example of conventional wiring arrangement in a vehicle in which a radio antenna and a rear defroster are arranged on the same surface of the rear windshield. Fig. 1 is a view taken from the passenger compartment. Fig. 2 is a plane view of the wiring arrangement shown in Fig. 1. In the drawings, there are essentially two cable arrangements represented by single lines including solid and hatched lines connected to a defroster sensor, a radio antenna and a rear-defroster device, and parallel double lines including solid and hatched lines connected to the other electrical devices such as a lamp provided in a rear trunk, tail lamps, audio speakers, a motor for a rear wiper, an air cleaner and so on. The hatched lines represent cables attached to the rear surface of a shield panel.

In Fig. 1, the reference numeral 1 denotes an antenna for a radio receiver. The numeral 2 denotes a rear defroster. The antenna 1 and the rear defroster 2 comprise a plurality of wires installed on the inner surface of a rear windshield 3 and connected to power supply terminals 4R and 4L at either end. Thus, the antenna 1 and the rear defroster 2 are electrically integral so that the rear defroster 2 is also utilized as an antenna, thereby improving sensitivity of the antenna 1 in AM band. The antenna 1 is further provided with an output terminal "AT" which is connected to a radio receiver mounted on an instrument panel via a shielded wire (not shown).

A cable 5R is connected to the terminal 4R and arranged in such manner that the cable 5R leads across the figure along the upper surface of a rear parcel tray panel 6. On the other hand, a cable 5L is connected to the terminal 4L on the right side of the figure. The cables 5R and 5L are connected to an induction filter 7 for reducing high frequency noise which is provided under the panel 6. The cables 5R and 5L are bundled together into a cable 5 after passing through the filter 7. The cable 5 runs along the underside of the panel 6 toward the left in the figure.

The reference numeral 8 denotes a control sensor for the rear defroster 2 which is positioned under the rear defroster 2. The sensor 8 detects the condition of the rear defroster 2 and actuates a switching means for the rear defroster 2. The sensor 8 is provided at either end with cables 9R and 9L, which pass through the panel 6 and are bunched with the cable 5 under the panel 6. The composite cable is denoted by the reference numeral 10. Hereinafter, the cables 5R, 5L, 5 9R, 9L, and 10 will be referred to as "defroster cables".

Also in Figs. 1 and 2, the reference numerals 11R and 11L denote audio speakers provided at the rear of the vehicle. The reference numeral 12 denotes a lamp for a trunk compartment. The reference numeral 13 denotes an air cleaner for the passenger compartment. Furthermore, the numerals 14R and 14L denote combination tail lamps mounted on either side of the far rear end of vehicle. Cables 15R and 15L connected to the speakers 11R and 11L respectively, a cable 16 connected to the trunk lamp 12, and a cable 17 connected to the air cleaner 13 are bunched with the cable 5 and the cable 10 under the tray panel 6, thereby forming a single cable 18.

In Figs. 1 and 2, the hatched portions represent assembled or bundled composite cables.

A cable 19L connected to the combination tail lamp 14L leads to the other lamp 14R and is bunched with a cable 19R from the lamp 14R. The assembled cable 19 leads along the inner surface of the rear right-quarter panel. Under the tray panel 6 the cable 19 joins the cable 18, thereby forming a main cable 20. The main cable 20 runs forwards along on the upper surface of a rear-seat back body panel 21.

Along the main cable 20, the cables 9R and 9L connected to the defroster sensor 8 are further provided with an amplifier 22 for the defroster sensor 8.

Hereinafter in this specification, the cables 15R, 15L, 16, 17, 19R and 19L connected to each electrical device are referred to generically as "electrical device cables".

In such conventionally arranged cables, the cable 10 including the cable 5 connected to the defroster 2 and the cables 9R and 9L connected to the defroster sensor 8 are joined with the electric equipment cables for a long distance as shown by the hatched portion of Figs. 1 and 2. When switching means of the electrical devices are actuated, switching noises are generated and are transmitted along the electrical device cables. Thus, the noise signals are induced in the cables connected to the defroster 2 and the sensor 8, and thus the noise signals can easily interfere with the signal from the radio antenna 1. Accordingly, radio noise is increased, which bothers the driver and passengers. On the other hand, in order to prevent such noise transmission, it is generally required to take countermeasures such as noise preventive devices mounted on each electrical device which might generate noise. Such countermeasures necessitate extra assembling processes and parts thereby increasing cost as previously noted.

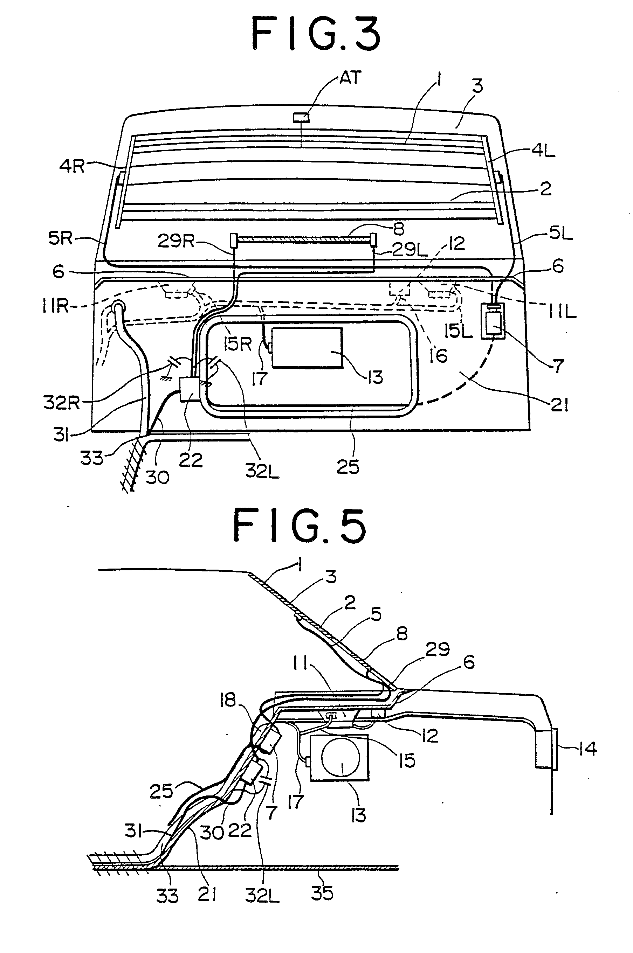

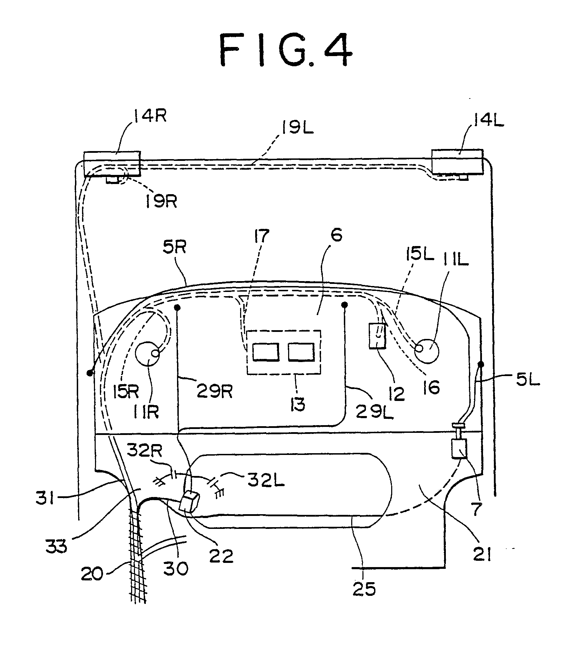

Referring to Figs. 3, 4, and 5, there is shown a wiring arrangement embodied according to the present invention. In these figures, the same reference numerals denote the same or corresponding parts or elements as shown in Figs. 1 and 2 in order to avoid confusion. Therefore, description of similar parts will not be repeated.

In this embodiment, the cables connected to the electrical devices such as the trunk lamp 12, the air cleaner 13, the audio speakers 11R and 11L, and the combination lamps 14R and 14L are arranged in the same manner as the conventional arrangement as shown in Figs. 1 and 2. On the other hand, however, the induction filter 7 for reducing high frequency noise is provided, at its input terminal, with a cable 25 which leads toward the left in Fig. 3 along the rear seat back body panel 21. Thus, the cable 25 is isolated from the electrical device cables such as 15L, 16, 17, and 15R. Further, the rear defroster sensor 8 is provided at each terminal with cables 29R and 29L which lead independently forwards in the vehicle along the upper surface of the tray panel 6. They are bunched together at the upper edge of the panel 21 and then connected to the defroster sensor amplifier 22. That is, the cables 29R and 29L are isolated from the electrical device cables.

A cable 30 leading out of the amplifier 22 is bunched with the cable 25. The assembled cable is bundled with a cable 31, which includes the electrical device cables, thereby forming the rear-main cable 20.

In the body or the vicinity of the sensor amplifier 22 ceramic condensers 32R and 32L having capacitance of about 0.01 µF are provided respectively in the space defined between panel 21 and the cables 29R or 29L so as to reduce signal noise.

According to this arrangement, the cables connected to the defroster and the defroster sensor such as 5R, 5L, 25, 30, 29R and 29L, hereinafter referred to as "defroster cables", are isolated from the electrical device cables, thereby protecting the defroster cable from noise signals transmitted along the electrical device cables.

In the above-embodied arrangement, if the condenser 32R or 32L is installed on the output side of the amplifier 22, i.e., interposed between the rear seat back body panel 21 and the cable 30, the arrangement results in less noise-reducing effect than that of the previous arrangement.

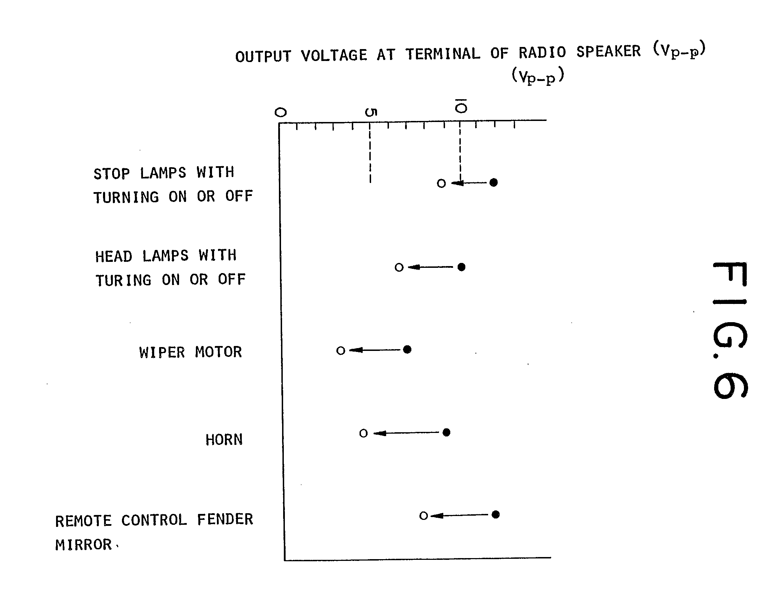

In the above-embodied arrangement, the defroster cables located behind the rear seat back body panel 21 and the electrical device cables are isolated from one another by the tray panel 6 so that the tray panel 6 functions as a shield panel. Furthermore, it is always necessary that the confluent point 33 of the cable 31 and the cable 30 be located at least in front of the rear seat back panel 21 which is interposed between a floor panel 35 and the rear parcel tray panel 6 as shown in Fig. 5.

According to experiment, when the cable 31 and the cable 30 were joined to the rear of the rear seat back panel 21, such arrangement could not effectively reduce noise in spite of isolating the cables from one another.

On the other hand, since the cable 30 and the cable 31 are bundled together at the confluent point 33 so as to form the rear main cable 20, it is impossible to perfectly prevent noise signal induction from the cable 31 to the cable 30. Thus, noise signals, however weak, are always induced in the cable 30. Furthermore, the cable 30 transmits noise signal originally generated in the defroster cables 5R, 5L, 25, 30, 29R, and 29L. Therefore, in this embodiment as previously noted, noise-preventive filter elements are provided in the defroster cables. That is, the induction filter 7 is interposed between the cables 5R and 5L and the cable 25. Furthermore, in the vicinity of the input terminal of the defroster sensor amplifier 22, the condenser filters 32R and 32L are connected between the cables 29R and 29L and the vehicle body (rear seat back body panel 21), respectively thereby reducing the noise signals from the defroster cables.

In this embodiment, it is desirable, from the technical and economical standpoints to use ceramic condensers having capacitances comprised between 0.001 µF and 0.1 µF for the condenser filters 32R and 32L. That is, if the capacity is smaller than the above minimum value, filtering effect will decrease. The other hand, if the capacity is larger than the above maximum value, the condenser will possibly exert a bad influence upon the operation of the defroster sensor amplifier 22.

If the cable 25 connected to the input terminal of the induction filter 7 is bundled with the cables 5R and 5L which are connected to the output terminal as shown in conventional arrangement, this will possibly interfere with the filtering effect of the induction filter 7 due to noise induction between the input cable 25 and the output cables 5R and 5L. Therefore, it is necessary to arrange them in such a manner that the cable 25 leads forwards as shown in Fig. 3 so as to be isolated from the cables 5R and 5L.

This embodied wiring arrangement is intended to protect the radio mounted on the vehicle from noise interference. Actually, it should be considered that additional noise, caused by the other cables such as an instrument cable, are also superimposed on the radio antenna signal. However, as is confirmed by experiment, such noises are so weak as to be ignored. Accordingly, the wiring arrangement and the noise-preventive filters provided in the arrangement previously discussed are sufficient to effectively reduce radio noise.

The output terminal AT of the antenna 1 is connected to the radio receiver (not shown) through a shielded wire (not shown) so that noise cannot be introduced into the radio receiver via the shielded wire.

Referring to Fig. 6, there is shown a graph representing a comparison between the noise generated by the embodied wiring arrangement and that of conventional arrangement. These data were taken at the terminal of the radio speaker. In the figure, the horizontal line represents operations of electrical devices mounted on the vehicle. The vertical line represents magnitude of noise measured at the speaker terminal which is indicated by terminal voltage (Vp-p). In the figure, the dark dots represent the data according to conventional arrangement and the blank dots represent that of the present invention. Each dot indicates an average value of data which result from measurements at several points within three frequency ranges of the AM band. The arrow represents the noise reducing effect resulting from the present invention.

As is understood from the graph shown in Fig. 6, the noise due to the electrical devices is attenuated significantly and to a constant degree by employing the wiring arrangement according to the present invention.

As given explanation above, the wiring arrangement in accordance with the present invention can easily prevent the radio receiver from intercepting the noise generated by several electrical devices. Furthermore, this arrangement can be easily utilized in any automotive vehicles in the rear body of which electrical devices, radio antenna, rear defroster and so on are arranged in substantially the same manner as shown in the accompanying drawings. Thus, noise preventive measures required in the conventional arrangement for each type of vehicles, each electrical device, and the like will be unnecessary, so that the cost of developing new vehicle models will be decreased.

It will be understood by those skilled in the art that the foregoing description is made in terms of preferred and alternative embodiments of the present invention.

**Claims**

1. Electrical wiring arrangement for use in an automotive vehicle equipped with a hot-wire-type rear defroster (2) and a radio antenna (1) on a rear-windshield, a defroster sensor (8) for controlling said defroster, and electrical devices, characterized by a first cable (30, 29R, 29L, 25, 5R, 5L) connected to the defroster (2) and the defroster sensor (8), a second cable (31, 15R, 15L, 16, 17, 19R, 19L) connected to the electrical devices (11R, 11L, 12, 13, 14R, 14L), said second cable being isolated from said first cable in at least the space in the rear of a rear seat back panel (21) and being bundled with said first cable in the space in front of the rear seat back panel (21), and noise preventive filter elements (32R, 32L, 7), said elements being interposed in said first cable, thereby reducing noise generated by the electrical devices and picked up by the radio antenna.

2. Wiring arrangement as set forth in claim 1, characterized in that in the space in the rear of the rear seat back panel (21) said first cable (30 ...) is arranged in the space above a rear parcel tray panel (6) and said second cable (31 ...) is arranged in the space beneath the rear parcel tray panel (6) acting as a shield panel.

3. Wiring arrangement as set forth in claim 1 or 2, characterized in that the defroster sensor (8) is connected to a defroster amplifier (22) for amplifying the signal from said sensor (8), the amplifier (22) being isolated from said second cable (31).

4. Wiring arrangement as set forth in any of claims 1 to 3, characterized in that said noise preventive filter elements comprises an induction filter (7) which is interposed between a cable (25) for power supply and two cables (5R, 5L) connected to the defroster (2), and two ceramic condensers (32R, 32L) which are respectively connected between the cables (29R, 29L) and the rear seat back body panel (21) in the vicinity of the input terminal of said amplifier (22).

5. Wiring arrangement as set forth in claim 4, characterized in that said ceramic condensers (32R, 32L) have capacitances in the range between 0,001 μF and 0,1 μF.

## Revendications

1. Câblage électrique utilité dans un véhicule automobile équipé d'un dégrivreur (2) du type à fil chaud et d'une antenne (1) de radio sur la lunette arrière, un capteur (8) de commande du dégrivreur, et des dispositifs électriques, caractérisé en ce qu'un premier câble (30, 29R, 29L, 25, 5R, 5L) connecté au dégrivreur (2) et au capteur (8) de commande du dégrivreur, un second câble (31, 15R, 15L, 16, 17, 19R, 19L) connecté aux dispositifs électriques (11R, 11L, 12, 13, 14R, 14L), ledit second câble étant isolé dudit premier câble dans au moins l'espace situé derrière le panneau (21) de dossier de siège arrière et étant mis en faisceau avec ledit premier câble dans l'espace situé devant du panneau (21) du dossier de siège arrière, et des éléments de filtrage anti-bruit (32R, 32L, 7), lesdits éléments étant interposés dans ledit premier câble en réduisant ainsi le bruit généré par les dispositifs électriques et capté par l'antenne de radio.

2. Câblage suivant la revendication 1, caractérisé en ce que, dans l'espace situé derrière le panneau (21) de dossier de siège arrière, ledit premier câble (30, 29R, 29L, 25, 5R, 5L) est disposé dans l'espace situé au-dessus du panneau (6) de plage ou plateau arrière à paquets et ledit second câble (31, 15R, 15L, 16, 17, 19R, 19L) est disposé dans l'espace situé au-dessous du panneau (6) de plage arrière agissant comme un panneau écran.

3. Câblage suivant la revendication 1 ou 2, caractérisé en ce que le capteur (8) de commande du dégrivreur est connecté à un amplificateur (22) de dégrivreur pour amplifier le signal dudit capteur (8), l'amplificateur (22) étant isolé dudit second câble (31).

4. Câblage suivant l'une quelconque des revendications 1 à 3, caractérisé en ce que lesdits éléments de filtrage anti-bruit comprennent un filtre à induction (7) qui est interposé entre le câble (25) d'alimentation en courant et deux câbles (5R, 5L) connectés au dégivreur (2), et deux condensateurs céramiques (32R, 32L) qui sont connectés respectivement entre les câbles (29R, 29L) et le panneau (21) de carrosserie du dossier de siège arrière au voisinage de la borne d'entrée dudit amplificateur (22).

5. Câblage suivant la revendication 4, caractérisé en ce que lesdits condensateurs céramiques (32R, 32L) ont des capacitances dans la plage de 0,001 μF et 0,1 μF.

## Patentansprüche

1. Elektrische Verdrahtungsanordnung für Kraftfahrzeuge mit einer Hitzdraht-Heckscheibenheizung (2) und einer Rundfunkantenne (1) auf der Heckscheibe, einem Heizungssensor (8) zur Steuerung der Heckscheibenheizung und elektrischen Einrichtungen, gekennzeichnet durch ein erstes Kabel (30, 29R, 29L, 25, 5R, 5L), das mit der Heckscheibenheizung (2) und dem Heizungssensor (8) verbunden ist, ein zweites Kabel (31, 15R, 15L, 16, 17, 19R, 19L), das mit den elektrischen Einrichtungen (11R, 11L, 12, 13, 14R, 14L) verbunden ist und von dem ersten Kabel wenigstens im Bereich hinter einer Rücksitz-Rücklehne (21) getrennt und mit diesem in einem Bereich vor der Rücksitz-Rücklehne (21) gebündelt ist, und Störschutz-Filterelemente (32R, 32L, 7) die in das erste Kabel eingefügt sind und Störungen reduzieren, die durch die elektrischen Einrichtungen erzeugt und durch die Rundfunkantenne aufgefangen werden.

2. Verdrahtungsanordnung gemäß Anspruch 1, dadurch gekennzeichnet, daß in dem Bereich hinter der Rücksitz-Rücklehne (21) das erste Kabel (30 …) oberhalb der rückwärtigen Hutablage (6) und des zweite Kabel (31 …) unterhalb der als Schirmplatte dienenden Hutablage (6) angeordnet ist.

3. Verdrahtungsanordnung nach Anspruch 1 oder 2, dadurch gekennzeichnet, daß der Heizungssensor (8) mit einem Scheibenheizung-Verstärker (22) zur Verstärkung des Signals des Heizungssensors (8) verbunden ist, welcher Verstärker (22) von dem zweiten Kabel (31) getrennt angeordnet ist.

4. Verdrahtungsanordnung nach einem der Ansprüche 1 bis 3, dadurch gekennzeichnet, daß die Störschutz-Filterelemente ein Induktionsfilter (7), das zwischen einem Kabel (25) für die Stromzufuhr und zwei mit der Heckscheibenheizung (2) verbundenen Kabel (5R, 5L) eingefügt ist, und zwei Keramik-Kondensatoren (32R, 32L) umfassen, die zwischen den Kabeln (29R, 29L) und der Rücksitz-Rücklehne (21) in der Nähe der Eingangsklemme des Verstärkers (22) angeordnet sind.

5. Verdrahtungsanordnung nach Anspruch 4, dadurch gekennzeichnet, daß die Keramik-Kondensatoren (32R, 32L) Kapazitäten im Bereich von 0,001 μF bis 0,1 μF aufweisen.

# FIG.1

# FIG.2

# FIG.3

# FIG.5

# FIG.4

OUTPUT VOLTAGE AT TERMINAL OF RADIO SPEAKER $(V_{p-p})$

$(V_{p-p})$

STOP LAMPS WITH
TURNING ON OR OFF

HEAD LAMPS WITH
TURING ON OR OFF

WIPER MOTOR

HORN

REMOTE CONTROL FENDER
MIRROR·

FIG.6

0053356